# EUROPEAN PATENT SPECIFICATION

(11) **EP 0 548 388 B1**
(45) Date of publication and mention of the grant of the patent: **15.02.1995**
(21) Application number: 91121946.7
(22) Date of filing: 20.12.1991
(51) Int. Cl.: C03C 21/00, G02B 6/12

(54) **Method and apparatus for burying waveguide paths**
Verfahren und Vorrichtung zur Einbettung von Wellenleitern
Procédé et dispositif d'enterrement de guides d'ondes

(43) Date of publication of application: 30.06.1993
(73) Proprietor: Corning Incorporated, Corning New York 14831 (US)
(72) Inventor: Beguin, Alain Marcel Jean, SP FR 02-12, Corning, NY 14831 (US); Laborde, Pascale, SP FR 02-12, Corning, NY 14831 (US); Presotto, Jean Claude Michel, SP FR 02-12, Corning, NY 14831 (US)
(74) Representative: Aron, Georges

(56) References cited:
- EP-A- 0 380 468
- EP-A- 0 380 468
- DE-A- 3 525 661
- US-A- 4 874 414
- JOURNAL OF LIGHTWAVE TECHNOLOGY. vol. 6, no. 10, October 1988, NEW YORK US
- pages 1483 - 1487; A.BEGUIN ET AL.: 'Fabrication and Performance of Low LossOptical Components Made by Ion Exchange in Glass.'
- SOVIET PHYSICS TECHNICAL PHYSICS. vol. 30, no. 1, January 1985, NEW YORK USpages 112 - 113; A.I.VOITENKOV ET AL.: 'Formation of Planar Waveguides inOptical Glasses by Electrodiffusion of Silver.'
- JOURNAL OF MATERIALS SCIENCE LETTERS. vol. 4, no. 9, September 1985, LONDON GBpages 1071 - 1075; T.KANEKO: 'Field-Assisted Diffusion Profiles of Ag+ Ions inGlass.'

## Description

### Background of the Invention

The present invention relates to the burying of optical waveguide paths of the type formed by ion-exchange techniques.

Passive optical waveguide paths have previously been formed in the surface of a glass substrate by ion-exchange processes. Such waveguide paths are useful for integrated optical applications due to their compatibility with optical fibers and their low cost of fabrication. A first surface of a glass substrate is initially masked by depositing a layer of masking material on a surface of the substrate, and photolithographically etching the layer of masking material, leaving openings where the waveguide path is to be formed. The masked surface is contacted by a first molten salt bath. In most cases, sodium ions in the substrate glass are exchanged for a dopant cation such as Cs, Ag, Ru or Tl. An electrical field is sometimes applied during this first ion-exchange process. The waveguide path can be buried under the substrate surface by removing the mask, applying an electrode to the second surface of the substrate and contacting the active side with a second molten salt bath which contains ions that contribute less to the substrate refractive index, eg. Na and K ions. While in contact with the second salt bath, an electrical field is applied between the bath and the second surface electrode.

As a result of this double ion-exchange process, there is formed beneath the first substrate surface a signal carrying region that has a higher refractive index than the region surrounding it. It is advantageous to have fairly sharp boundaries between the higher refractive index region and its neighboring regions. Moreover, the higher refractive index region should be buried deeply enough beneath the substrate surface to prevent scattering from surface irregularities and defects. A depth greater than 15 »m is conventionally employed to prevent the electromagnetic field from reaching the surface of the glass. The refractive index profile depends on such parameters as the composition of the substrate glass, the nature of the incoming dopant ion, its concentration in the source, salt bath temperature, diffusion time, and the magnitude of the externally applied field.

The adverse effects of thermal diffusion can be reduced by burying a waveguide at a relatively low temperature. However, the processing time required to achieve a given depth correspondingly increases. An electrical field has been used to increase the rate of ion movement at low temperatures. US patent No. 4,913,717 states that waveguides having sharp, well defined boundaries can be formed by performing the first ion-exchange at low temperature and under the influence of an electrical field of up to a few hundred volts per millimeter and burying the waveguide at a low temperature and again applying the voltage.

Although further increase in electrical field strength can decrease processing time, it can result in a number of problems: (a) it can cause arcing, (b) it can cause breakage of the glass substrate by having short circuits between the two sides of the glass substrate, these short-circuits being due to ion migration up the edges of the substrate, and (c) it can cause process instability due to Joule effect heating of the substrate. Some of these problems exist at fields as low as about 200 V/mm.

### Summary of the Invention

It is therefore an object of the invention to provide a method and apparatus for reproducibly burying within a glass substrate optical waveguide paths that have sharp, well defined boundaries.

The present invention relates to a method and apparatus for burying an optical waveguide path of dopant ions extending along a first surface of a glass substrate having first and second opposed surfaces. The apparatus comprises means (37) for supporting the substrate (13') such that the first substrate surface (17') is in contact with a molten salt bath (10'). A porous conductive electrode (19) is disposed on the second surface (18') of the substrate. Means (23') applies a voltage across the porous electrode and the bath to create an electrical field that drives the dopant ions deeper into the substrate.

The apparatus of the invention is particularly useful in processes wherein electrical fields greater than 500 V/mm are applied across the substrate (13'). The porous electrode (19) preferably consists of a layer of carbon particles. The substrate supporting means (37) can include a planar conductive surface (42) for contacting the porous electrode (19'), the means (23') for applying a voltage being connected to the conductive surface (42). A groove (41) extends around the periphery of the conductive surface, and means (40, 43) evacuates the groove and removes oxygen from the porous electrode (19'). A glass insulating ring (35) can be affixed to the periphery of the second surface (18') to prevent salts from the bath (10') from migrating up the side surfaces of the substrate by capillary action.

In accordance with the method of the invention, an optical waveguide path is initially formed at the first surface (17') of the substrate (13') by ion-exchange. Porous electrode (19) is applied to the second surface (18') of the substrate, and the first surface of the substrate is brought into contact with the molten salt bath (10'). An electrical field is applied across the substrate to drive the first ions deeper into the substrate.

The porous electrode can be formed by applying a mask to the peripheral portion of the second surface, spraying the second surface with carbon particles suspended in a volatile vehicle, and evaporating the vehicle.

### Brief Description of the Drawings

Fig. 1 is a schematic representation of a prior art salt bath system for burying optical waveguide paths within a substrate.

Fig. 2 is a cross-sectional view of a vacuum holder for a substrate.

Fig. 3 is a cross-sectional view illustrating the application of a coating of carbon particles to a substrate.

Fig. 4 is a bottom view of the vacuum holder of Fig. 2.

Fig. 5 is a graph illustrating the voltage applied across a substrate during the second ion-exchange process and the resultant current through the substrate.

Fig. 6 is a plan view of a portion of the surface of a substrate that is masked for the first ion-exchange process.

### Description of the Preferred Embodiments

Examples of methods and apparatus for forming by ion-exchange an optical waveguide path in the surface of a glass substrate and the subsequent burying of that path can be found in US patents Nos. 3,836,348; 4,765,702; 4,842,629; 4,913,717; and 4,933,262. Also see publications: R.V. Ramaswamy et al. "Ion-Exchanged Glass Waveguides: A Review", Journal of Lightwave Technology, Vol. 6, No. 6, June 1988, pp. 984-1002; H.J. Lilenhof et al. "Index Profiles of Multimode Optial Strip Waveguides by Field Enhanced Ion Exchange in Glasses", Optics Communications, Vol. 35, No. 1, October, 1980, pp. 49-53; and A. Miliou et al. "Fiber-Compatible K⁺-Na⁺ Ion-Exchanged Channel Waveguides: Fabrication and Characterization", IEEE Journal of Quantum Electronics, Vol. 25, No. 8, August, 1989, pp 1889-1897.

The first ion-exchange can be carried out as described hereinabove and as described in greater detail in the specific example set forth below. Although ions of Cs, Ag, Ru, Tl or the like can be employed for the first ion-exchange, reference will be made to thallium ions in order to simplify the discussion. After one or more waveguide paths have been formed in the first surface 17 by the first ion-exchange process, the mask is removed and an electrode is applied to the second surface.

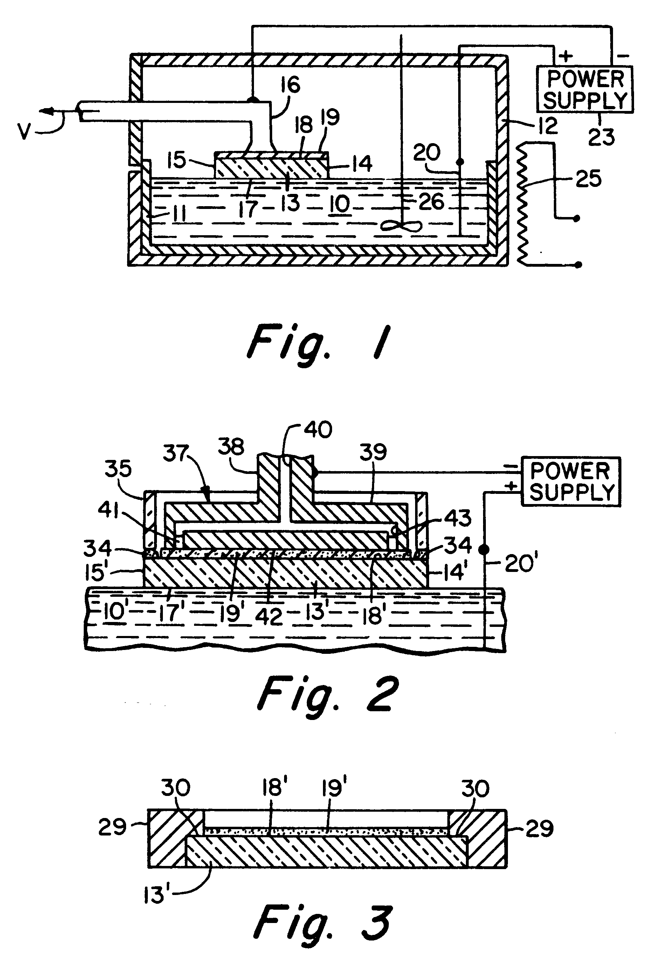

In the second ion-exchange apparatus shown in Fig. 1, molten salt bath 10 is held in container 11 which is kept at a constant temperature in furnace 12. Bath 10 consists of the appropriate salt as the source for the diffusing ions. Diffusion temperature is adjusted to control the rate of diffusion. Characteristics which influence the choice of a salt for a given ion are its melting point and the dissociation temperature. In some cases, melting temperatures can be lowered by using a mixture of two salts. Substrate 13 is usually a silicate glass containing appropriate ions for the exchange process and appropriate constituants to provide the desired refractive index. Substrate 13 can be positioned by various types of holders such as vacuum holder 16 such that first substrate surface 17 is in contact with salt bath 10. Arrow V indicates the application of vacuum to holder 16. The second substrate surface 18 is provided with a negative electrode. Although a second salt bath has usually been employed, the use of a metallic electrode 19 of gold, aluminum or the like results in a simpler apparatus. The negative terminal of power supply 23 can be connected directly to electrode 19, or it can be connected to a metallic vacuum holder 16. The positive power supply terminal is connected to a platinum wire 20 that is immersed in the molten salt. A glass tube (not shown) usually surrounds wire 20 and traps bubbles generated at that electrode. Stirrer 26 circulates that portion of the bath from the walls adjacent heater 25 to the remainder of the bath, thereby maintaining a relatively uniform temperature throughout the bath. Substrate 13 is preferably preheated in a chamber (not shown) adjacent furnace 12 prior to its entry into the furnace. An electrical field that is preferably greater than 300 V/mm should be applied across the substrate to bury the surface waveguides with minimal thermal diffusion of the Tl ions. Various of the elements described below have been incorporated into the ion-exchange apparatus to enable it to withstand the high voltages required to generate the field.

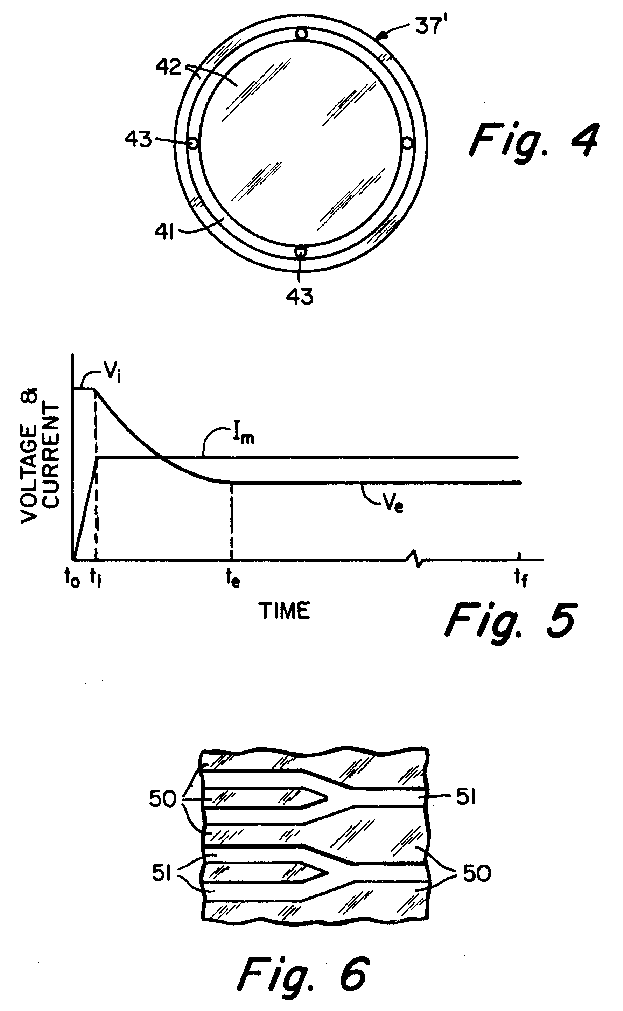

A preferred electrode and vacuum holder is shown in Figs. 2 and 4, wherein elements similar to those of Fig. 1 are represented by primed reference numerals. Substrate holder 37 consists of a support arm 38 and a bottom portion 39. A manifold system including holes 40 and 43 evacuates annular groove 41 which extends around the periphery of bottom surface 42. Substrate 13' is thus secured to holder 37 with electrode 19' in very good electrical and thermal contact with bottom surface 42. Bottom surface 42 preferably has the same general shape as the substrate, a round shape being illustrated. A square substrate would employ a square holder to allow the bottom surface of the holder to substantially cover electrode 19'. Substrate holder 37 maintains surface 17' of substrate 13' at the surface of the molten salt 10' and applies the negative power supply voltage to electrode 19'.

Electrode 19' is preferably a porous conductive layer formed of carbon or a refractory metal such as tungsten, chromium, molybdenum, titanium or the like. The conductive material can be deposited in particle form from a spray including a volatile solvent and a polymer binder. A mask 29 (Fig. 3) can be employed to limit the deposition of electrode 19' to the desired region of the substrate surface. The deposited layer can be heated to evaporate the solvent, thus forming a layer that is itself porous or which becomes porous when heated to a temperature that is sufficiently high to cause decomposition of the binder. The porous electrode allows the ions of sodium, potassium or the like to emerge from the glass substrate without destroying the electrode.

Electrode 19' is preferably formed of porous carbon, a non-sticking material that is easily deposited and is chemically resistant to Na and K. Carbon withstands high temperatures, and it is a good electrical and thermal conductor.

A narrow bead 34 of adhesive is applied to peripheral portion 30. A ring 35 of electrically insulating material is pressed onto adhesive 34, whereby it becomes attached to the substrate. The adhesive must be able to withstand the high temperatures of the second ion-exchange step. Ring 35 can be formed of the same material as substrate 13' to eliminate the possibility of any problems due to thermal expansion mismatch. However, ring 35 can be formed of other materials having thermal expansion coefficients slightly different from that of substrate 13'.

After substrate 13' has been prepared as described above, groove 41 is evacuated, and the substrate is mounted on holder 37. The substrate has previously had a thallium-doped optical waveguide path formed in the first surface thereof by a first ion-exchange process as previously described. The substrate is preheated and then inserted into the second ion-exchange furnace where its bottom surface 17' is lowered into contact with the molten salt bath 10'. The salt bath is maintained at a relatively low temperature, i.e. one that is significantly lower than the substrate glass transition temperature T_{g}, so that the Tl ions have a sufficiently low thermal diffusion constant. The thermal diffusion constant of the Tl ions should be below 5x10⁻¹² cm²/sec. In order to bury the optical waveguide path within a reasonably short time period at this low temperature, the process employs high electrical fields, i.e. fields above 500 V/mm. This causes the Tl ions to be driven deeply into the substrate; however, the thermal diffusion of these ions is sufficiently low that the optical path will not be significantly broadened, i.e. the cross-sectional dimensions of the buried path are no more than about twice the cross-sectional dimensions of the originally formed path.

As the potassium ions and/or the sodium ions reach porous electrode 19', they will occupy the pores where they are reduced to their metallic form. The region of porous electrode 19' within the confines of annular ring 41 is evacuated. Since air cannot occupy the evacuated region, the Na and K occupying that region cannot be re-oxidized to form an insulating layer. Rather, the Na and K remain in metallic form, whereby an electrically and thermally conductive layer is formed. This results in the application of a uniform electrical field across the substrate, thus improving the process of burying the optical waveguide paths.

At high electrical fields and in the absence of ring 35, salts would tend to migrate up side surfaces 14' and 15' by capillary action, and the resulting coating would form a short circuit between electrode 19' and bath 10'. Such high electrical fields could also cause short circuiting directly between electrode 19' and bath 10'. Ring 35 increases the distance between electrode 19' and salt bath 10', thus preventing both types of discharges between those two conductive elements.

Joule effect heating of the substrate due to the high electrical field can cause process instability. To prevent such instability, the electrical field is controlled by regulating the current supplied by the power supply. As voltage Vᵢ is supplied to electrodes on opposite sides of the substrate, substrate temperature begins to increase, thus causing the current through the substrate to increase. At time t₁, when a predetermined maximum current Iₘ has been reached (see Fig. 5), the power supply begins to supply a constant current to the circuit including electrodes 19' and 20'. Between times t₀ and t₁, voltage remains at Vᵢ. At t₁, the voltage begins to drop until time tₑ, after which the voltage remains substantially constant at the equilibrium voltage Vₑ. The difference between times t₀ and t₁ can be made shorter by increasing Vᵢ. By maintaining a constant current, control of the process is greatly facilitated. The number of exchanged ions is indicative of the depth to which an optical path has been buried. Controlling both current and time therefore leads to precise control of exchanged ions and thus the depth of burial of the waveguide path.

After completion of the second ion-exchange process, the substrate is cooled at a controlled rate until its temperature is sufficiently low that it can be safely brought to room temperature. Since a plurality of optical devices are conventionally formed side-by-side and/or end-to-end on the substrate, the substrate is cut into sections, each of which contains one or more devices, as desired. Optical fiber pigtails can be aligned with and affixed to the ends of the optical waveguide paths by a technique such as that taught in U.S. patent No. 4,943,130.

The following example illustrates the improvements that can be realized by utilizing the apparatus of the present invention to bury optical waveguide paths with the assistance of a high electrical field.

A first ion-exchange process was employed to form thallium-doped optical waveguide paths along a first surface of a 3 mm thick circular glass substrate having 60 mm diameter. The substrate was formed of an alumino borosilicate glass containing sodium and potassium ions. Its refractive index was 1.463. A photolithographic technique was employed to form a silicon mask 50 on a first planar surface of the substrate. A small central portion of the masked substrate is shown in Fig. 6. Mask 50 had forty parallel, Y-shaped, openings 51, each opening being 3 »m wide.

The substrate was inserted into a furnace containing a thallium nitrate salt bath. The temperature of the furnace atmosphere, which was initially 200°C, was increased to 340°C. The masked surface of the substrate was then lowered into contact with the 340°C thallium nitrate salt bath for one hour. Forty Y-shaped, thallium-doped optical waveguide coupler paths were formed in the first substrate surface adjacent the mask openings by thermal diffusion. The substrate was removed from the bath to the furnace atmosphere where it was cooled to 200°C. It was then removed from the furnace and cooled to room temperature. The mask was then removed. A suitable method for applying and removing mask 50 is taught in French patent application S.N. 91 11923, filed 27 September 1991.

Mask 29 (see Fig. 3) was placed over substrate 13' to cover peripheral portion 30 of second substrate surface 18'. A carbon particle coating was sprayed onto the exposed surface of the substrate from a commercially available container sold under the name Pulvegraph D 31 A manufactured by Acheson France S.A. - BP 36 - La Gueroulde - 27160-Breteuil-sur-Iton. The spray contained lamellar graphite in a polymeric binder and a solvent. The thickness of the carbon coating was in the range of about 12-25 »m. Mask 29 was removed, and the substrate was heated to about 100°C to evaporate the solvent from the carbon coating. The substrate was cooled, and a thin bead of General Electric RTV 118 silicone was applied to the periphery of side 18'. An annular, 35 mm high glass ring 35 was pressed onto the silicone bead, and the adhesive was allowed to polymerize at room temperature for at least 10 hours. The composition of ring 35 was the same as that of substrate 13'. The substrate was then affixed to holder 37 as shown in Fig. 2.

The second ion-exchange process, during which the initially formed optical waveguide paths were buried, was performed in a second ion-exchange furnace containing a molten salt bath mixture comprising 80% potassium nitrate and 20% sodium nitrate. Both the furnace atmosphere and the bath were maintained at 310°C.

The substrate was initially inserted into a heating/cooling chamber adjacent the second ion-exchange furnace; the initial temperature of the chamber was 200°C. The chamber temperature was increased in order to raise the temperature of the substrate to 310°C. The substrate was inserted into the second ion-exchange furnace where it was lowered into contact with the 310°C molten salt bath mixture. Stirrer 26, which was located to one side of the substrate, was operated at a moderate speed which was sufficient to homogenize the bath at a temperature of 310°C throughout. An electrical potential Vᵢ of 3000 V was applied between electrode 19' and bath 10'. After 2 minutes (t₁), the current through the substrate had increased to a predetermined maximum value Iₘ of 5.7 ma, after which time the voltage began to gradually decrease (Fig. 5) to maintain the current at a constant value of 5.7 ma. At 30 minutes from t₀, the voltage had decreased to 2100 V; it remained at that value until the end of the run, 9 hours after t₀. The electrical field within the substrate was therefore 700 V/mm between times tₑ and t_{f}.

After the voltage and current reached equilibrium values (30 minutes from t₀), the mean substrate temperature was determined to be 330°C. Substrate temperature can be deduced by inserting a sample into a furnace with its surface in contact with the molten bath. After the sample temperature reaches equilibrium at the bath temperature, a voltage is applied, the current measured, and resistivity R is calculated. The voltage is turned off, the bath temperature is changed, a voltage is again applied, and current is again measured. This procedure is repeated a sufficient number of times within the temperature region of interest, to plot a graph of log₁₀ R v. 1/T. During any given second ion-exchange treatment, substrate temperature can be deduced by deriving resistivity from the voltage and current and then obtaining temperature from the previously generated graph of log₁₀ R v. 1/T.

After completion of the waveguide path burying process, the substrate was transferred from the second ion-exchange furnace to the heating/cooling chamber, the temperature of which was 310°C. After the substrate temperature had decreased to 200°C, the substrate was removed from the chamber.

The second ion-exchange treatment caused the Tl ions to be driven into the substrate to a depth of about 25 »m. The 20°C average temperature differential between the substrate and the bath was sufficiently low that the temperature of substrate 13' was relatively uniform throughout its cross-section. The optical waveguide coupler paths ran along the substrate from side 14' to side 15'. A section of substrate was removed from each of the sides 14' and 15' and from the sides perpendicular to sides 14' and 15'. The remaining 40 mm square section contained 40 optical couplers.

While devices are still on the 40 mm square wafer, insertion loss and cutoff wavelength are measured. One end of a first optical fiber is connected to a light source and one end of a second optical fiber is connected to a detector. A reference signal is obtained by connecting the remaining ends of the fibers together and aligning their cores to maximize light throughput. The output end of the first fiber is sequentially aligned with the input ends of the optical couplers. Light is radiated into each coupler with the input fiber aligned with its input path. An output optical fiber is aligned with each output path and the output power is measured. For a 3 dB coupler, the maximum allowable insertion loss for each output path might be 3.8 dB before optical fiber pigtails are attached.

The substrate is cut into 40 individual optical couplers; each coupler being 1 mm wide. Optical fiber pigtails are glued to the three path ends of each Y-shaped coupler. For the process described in this example, a high percentage of the couplers from each 40 mm square substrate exhibit insertion losses of less than 4 dB. The pigtails permissibly add a few tenths of a dB loss to the couplers.

## Claims

1. Apparatus for burying an optical waveguide path of dopant ions extending along a first surface of a glass substrate having first and second opposed surfaces, said apparatus comprising
a molten salt bath (10'),
means (37) for supporting said substrate (13') such that the first surface (17') thereof is in contact with said molten salt bath,
a porous conductive electrode (19) disposed on said second surface (18'), and
means (23') for applying an electrical voltage across said porous electrode and said bath for driving the dopant ions deeper into said substrate.

2. Apparatus in accordance with claim 1 wherein said means (23') for applying a voltage applies a voltage sufficient to create an electrical field greater than 500 V/mm across said substrate (13').

3. Apparatus in accordance with claims 1 or 2 wherein said porous electrode (19) consists of a layer of carbon particles.

4. Apparatus in accordance with claim 3 further comprising means (40, 41, 43) for removing oxygen from said porous electrode (19').

5. Apparatus in accordance with claim 4 wherein said means (37) for supporting said substrate includes a planar conductive surface (42) for contacting said porous electrode (19'), said means (23') for applying a voltage being connected to said conductive surface (42), said means for removing oxygen including a groove (41) extending around the periphery of said conductive surface, and means (40, 43) for evacuating said groove.

6. Apparatus in accordance with any of the preceding claims further comprising a glass insulating ring (35) affixed to the periphery of said second surface (18').

7. A method for forming an optical waveguide path under the surface of a glass substrate having first and second opposed surfaces, the method comprising
forming an optical waveguide path at the first surface (17') of said substrate (13') by ion-exchange,
applying a porous electrode (19) to the second surface (18') of said substrate,
contacting said first surface with a molten salt bath (10'), and
applying an electrical field across said substrate to drive the first ions deeper into said substrate.

8. A method in accordance with claim 7 wherein said electrical field is greater than 500 V/mm.

9. A method in accordance with claim 7 wherein said porous electrode is formed of carbon particles.

10. A method in accordance with claim 7 wherein the step of applying a porous electrode comprises spraying said second surface with carbon particles suspended in a volatile vehicle and evaporating said vehicle.

11. A method in accordance with claim 10 wherein, prior to the step of spraying said second surface with carbon particles, a mask is applied to the peripheral portion of said second surface.

12. A method in accordance with any of claims 7, 8, 9, 10, and 11 further comprising the step of removing oxygen from said porous electrode (19').

13. A method in accordance with claim 7 wherein the step of contacting said first surface with a molten salt bath (10') comprises supporting said substrate from a holder (37) having a planar conductive surface (42) that contacts said porous electrode (19'), said planar surface having an evacuated groove (41) extending around the periphery thereof for removing oxygen from said porous electrode.

14. A method in accordance with any of claims 7, 8, 9, 10, 11, 12 and 13 further comprising the step of preventing salts from migrating up side surfaces (14', 15') from said bath (10') by capillary action by affixing a glass insulating ring (35) to the periphery of said second surface (18').

## Patentansprüche

1. Vorrichtung zur Einbettung einer optischen Wellenleiterbahn aus Dotierungsionen, die sich entlang einer ersten Fläche eines Glassubstrates erstreckt, das ersten und zweiten einander entgegengesetzten Flächen hat, mit
einem Salzschmelzenbad (10'),
einer Einrichtung (37) zum Halten des Substrates (13') derart, daß dessen erste Fläche (17') mit dem Salzschmelzenbad in Kontakt ist,
einer auf der zweiten Fläche (18') angeordneten porösen leitfähigen Elektrode (19), und
einer Einrichtung (23') zum Anlegen einer elektrischen Spannung an die poröse Elektrode und das Bad, um die Dotierungsionen tiefer in das Substrat zu treiben.

2. Vorrichtung nach Anspruch 1, bei der die Einrichtung (23') zum Anlegen einer Spannung eine Spannung anlegt, die zur Erzeugung eines elektrischen Feldes von mehr als 500V/mm am Substrat (13') ausreichend ist.

3. Vorrichtung nach Anspruch 1 oder 2, bei der die poröse Elektrode (19) aus einer Schicht aus Kohlenstoffpartikeln besteht.

4. Vorrichtung nach Anspruch 3, ferner mit einer Einrichtung (40,41,43) zum Entfernen von Sauerstoff von dieser porösen Elektrode (19').

5. Vorrichtung nach Anspruch 4, bei der die Einrichtung (37) zum Halten des Substrates eine planare leitfähige Fläche (42) zum Kontaktieren der porösen Elektrode (19') aufweist, wobei die Einrichtung (23') zum Anlegen einer Spannung mit der leitfähigen Fläche (42) verbunden ist, wobei die Einrichtung zum Entfernen von Sauerstoff eine um den Umfang der leitfähigen Fläche (42) verlaufende Nut (41) und eine Einrichtung (40,43) zum Evakuieren der Nut aufweist.

6. Vorrichtung nach einem der vorhergehenden Ansprüche, ferner mit einem am Umfang der zweiten Fläche (18') befestigten Glasisolierring (35).

7. Verfahren zur Bildung einer optischen Wellenleiterbahn unter der Oberfläche eines Glassubstrates mit ersten und zweiten einander entgegengesetzten Flächen, mit den Schritten:
Bilden einer optischen Wellenleiterbahn an der ersten Fläche (17') des Substrates (13') durch Ionenaustausch,
Anlegen einer porösen Elektrode (19) an die zweite Fläche (18') des Substrates,
In-Kontakt-Bringen der ersten Fläche mit einem Salzschmelzenbad (10') und
Anlegen eines elektrischen Feldes an das Substrat, um die ersten Ionen tiefer in das Substrat zu treiben.

8. Verfahren nach Anspruch 7, bei dem das elektrische Feld stärker als 500V/mm ist.

9. Verfahren nach Anspruch 7, bei dem die poröse Elektrode aus Kohlenstoffpartikeln gebildet ist.

10. Verfahren nach Anspruch 7, bei dem der Schritt des Anlegens einer porösen Elektrode das Besprühen der zweiten Fläche mit in einem flüchtigen Träger suspendierten Kohlenstoffpartikeln und das Verdampfen des Trägers umfaßt.

11. Verfahren nach Anspruch 10, bei dem vor dem Schritt des Besprühens der zweiten Fläche mit Kohlenstoffpartikeln eine Maske auf den Umfangsbereich der zweiten Fläche aufgebracht wird.

12. Verfahren nach einem der Ansprüche 7, 8, 9, 10 und 11, ferner mit dem Schritt des Entfernens von Sauerstoff von der porösen Elektrode (19').

13. Verfahren nach Anspruch 7, bei dem der Schritt des In-Kontakt-Bringens der ersten Fläche mit einem Salzschmelzenbad (10') das Halten des Substrates von einem Halter (37) mit einer planaren leitfähigen Fläche (42) umfaßt, die die poröse Elektrode (19') kontaktiert, wobei die planare Fläche eine um ihren Umfang verlaufende evakuierte Nut (41) zum Entfernen von Sauerstoff von der porösen Elektrode aufweist.

14. Verfahren nach einem der Ansprüche 7, 8, 9, 10, 11, 12 und 13, ferner mit dem Schritt des Verhinderns, daß die Salze aus dem Bad (10') durch Kapillarwirkung an den Seitenflächen (14',15') hinaufwandern, durch Befestigen eines Glasisolierrings (35) am Umfang der zweiten Fläche (18').

## Revendications

1. Dispositif pour enterrer un chemin de guide d'onde optique constitué d'ions de dopant s'étendant suivant une première surface d'un substrat de verre comportant des première et seconde surfaces opposées, ledit dispositif comprenant
un bain de sel fondu (10'),
un moyen (37) pour supporter ledit substrat (13') tel que sa première surface (17') soit en contact avec ledit bain de sel fondu,
une électrode conductrice poreuse (19) disposée sur ladite seconde surface (18'), et
un moyen (23') pour appliquer une tension électrique aux bornes de ladite électrode poreuse et dudit bain pour faire pénétrer les ions de dopant plus profondément dans ledit substrat.

2. Dispositif selon la revendication 1, dans lequel ledit moyen (23') pour appliquer une tension applique une tension suffisante pour créer un champ électrique supérieur à 500 V/mm dans ledit substrat (13').

3. Dispositif selon la revendication 1 ou 2, dans lequel ladite électrode poreuse (19) est constituée d'une couche de particules de carbone.

4. Dispositif selon la revendication 3, comprenant de plus un moyen (40, 41, 43) pour extraire l'oxygène de ladite électrode poreuse (19').

5. Dispositif selon la revendication 4, dans lequel ledit moyen (37) pour supporter ledit substrat comporte une surface conductrice plane (42) pour être en contact avec ladite électrode poreuse (19'), ledit moyen (23') pour appliquer une tension étant connecté à ladite surface conductrice (42), ledit moyen pour extraire l'oxygène comportant une rainure (41) s'étendant autour de la périphérie de ladite surface conductrice, et un moyen (40, 43) pour faire le vide ladite rainure.

6. Dispositif selon l'une des revendications précédentes, comprenant de plus une bague isolante de verre (35) fixée à la périphérie de ladite seconde surface (18').

7. Procédé pour former un chemin de guide d'onde optique sous la surface d'un substrat de verre ayant des première et seconde surfaces opposées, le procédé comprenant les étapes consistant à :
former un trajet de guide d'onde optique à la première surface (17') dudit substrat (13') par échange d'ions,
appliquer une électrode poreuse (19) à la seconde surface (18') dudit substrat,
mettre en contact ladite première surface avec un bain de sel fondu (10'), et
appliquer un champ électrique dans ledit substrat pour faire pénétrer les premiers ions plus profondément dans ledit substrat.

8. Procédé selon la revendication 7, dans lequel ledit champ électrique est supérieur à 500 V/mm.

9. Procédé selon la revendication 7, dans lequel ladite électrode poreuse est constituée de particules de carbone.

10. Procédé selon la revendication 7, dans lequel l'étape consistant à appliquer une électrode poreuse comprend la pulvérisation sur ladite seconde surface de particules de carbone suspendues dans un porteur volatil et l'évaporation dudit porteur.

11. Procédé selon la revendication 10, dans lequel avant l'étape consistant à disperser sur ladite seconde surface des particules de carbone, un masque est appliqué à la partie périphérique de ladite seconde surface.

12. Procédé selon l'une quelconque des revendications 7, 8, 9, 10 et 11 comprenant de plus l'étape consistant à extraire l'oxygène de ladite électrode poreuse (19').

13. Procédé selon la revendication 7, dans lequel l'étape consistant à mettre en contact ladite première surface avec un bain de sel fondu (10') comprend l'étape consistant à supporter ledit substrat à partir d'un support (37) ayant une surface conductrice plane (42) qui est en contact avec ladite électrode poreuse (19'), ladite surface plane ayant une rainure (41) où l'on fait le vide s'étendant autour de sa périphérie pour enlever l'oxygène de ladite électrode poreuse.

14. Procédé selon l'une quelconque des revendications 7, 8, 9, 10, 11, 12 et 13 comprenant de plus l'étape consistant à empêcher les sels de migrer vers les surfaces latérales (14', 15') dudit bain (10') par capillarité, en fixant une bague isolante de verre (35) à la périphérie de ladite seconde surface (18').
